# EUROPEAN PATENT SPECIFICATION

(11) **EP 0 580 907 B1**
(45) Date of publication and mention of the grant of the patent: **09.04.1997**
(21) Application number: 92307031.2
(22) Date of filing: 31.07.1992
(51) Int. Cl.: B23P 19/06, F16B 27/00

(54) **Tee-nut fastener strip and fastener feed means for fastener setting apparatus**
Band mit T-Mutter und Anordnung zur Speisung von Befestigungselementen für eine Vorrichtung zum Anbringen von Befestigungselementen
Bande à écrous en forme de té et moyens d'alimentation des éléments de fixation pour un dispositif de pose des éléments de fixation

(43) Date of publication of application: 02.02.1994
(73) Proprietor: SIGMA TOOL & MACHINE, Scarborough, Ontario M1P 2P2 (CA)
(72) Inventor: Leistner, Walter H., Toronto, Ontario (CA); Bromley, Keith G., Bradford, Ontario (CA)
(74) Representative: W.P. Thompson & Co.

(56) References cited:
- FR-A- 2 135 945
- FR-A- 2 436 275
- FR-A- 2 523 663
- US-A- 1 833 554
- US-A- 3 811 171

## Description

The present invention relates to a plurality of individual Tee-nut fasteners having sleeve portions adapted to be embedded on a workpiece, and face flanges adapted to lie on the surface of a workpiece, formed on a strip, and a feed apparatus for the strip of fasteners.

More particularly, the present invention relates to a strip of Tee-nut fasteners for use with a fasten setting apparatus for setting threaded fasteners in a wooden workpiece, and to a feed apparatus for such fasteners.

Attention is drawn by way of example, to Fr-A-2436275 which is considered to define the closest prior art.

Threaded fastening devices or so-called Tee-nuts are widely used in the furniture and other industries for securing components of for example furniture together. Such nuts are formed of sheet metal, and incorporate a threaded sleeve or barrel, and an integral face flange, and spikes, which are embedded in the workpiece around a pre-drilled hole. They are used, for example, in the construction of beds, chairs, tables, couches and the like for securing components, and in other furniture items.

Various forms of apparatus have been devised for the power-operated setting of such fastening devices at a high rate of speed. One example of such a fastener setting apparatus is shown in U.S. Patent No.3,460,217

The apparatus disclosed in U.S. Patent No.3 460 217 has operated satisfactorily for many years. In that apparatus, the wooden workpiece was first of all placed on a lower working surface. Tee-nuts were fed from a hopper down a curved ramp, to a power-operated setting plunger located above the workpiece. The Tee-nut was held in registration with the bottom of the plunger, and when the plunger was operated downwardly the Tee-nut was released, and the plunger struck the tee-nut forcing it downwardly into a hole in the workpiece.

One problem in the design of such earlier machines was that they required the use of a hopper, and a relatively expensive feed mechanism, for feeding the loose nuts. These requirements added to the complexity and hence the expense of such earlier apparatus. These factors had, in turn, limited the scope of the sales of such machines. In practice, they were economical only for relatively large scale manufacturing facilities.

A further proposal is shown in U.S. Letters Patent No.4,821,940, granted to Allan C. Rotherham entitled Tee-nut Insertion Machine. In this machine, a hopper and feed mechanism generally similar to that shown in earlier Tee-nut setting machines, was used. However, in this machine, the Tee-nuts were fed to a feed mechanism from which they were delivered one at a time to a plunger. The plunger in this case operated with an upward insertion stroke, so that the Tee-nut was forced upwardly into the workpiece.

Above the workpiece, a stationary anvil or support was located against which the workpiece was held, while the Tee-nut was forced upwardly. In this device also, however, the Tee-nuts were simply placed loose in the hopper as in the earlier devices.

The problem of handling loose nuts in such apparatus caused jamming and misfeeding in the feed apparatus, and was a constant source of trouble.

It would be highly advantageous if such nuts could be handled in some other fashion. In addition, if a simplified feed mechanism could be designed at a much lower cost and, in particular, without the use of an expensive and complex hopper and feed mechanism, then the sales of such a machine could be made on a much larger scale, to a much greater range of customers.

Such setting machines may operate on the method of upward insertion of fasteners, into a workpiece from below the workpiece, or by driving each fastener downwardly from above the workpiece.

According to the present invention there is provided a plurality of individual Tee-nut fasteners, wherein said fasteners have sleeve portions adapted to be embedded in a workpiece, and face flanges adapted to lie on the surface of a workpiece, said sleeve portions each having a central longitudinal axis and said longitudinal axes lying in a first plane, said face flanges lying in a further plane which is transverse to said first plane, the plurality of said fasteners all being separate and spaced from one another, characterised by a length of continuous flexible breakable means overlying said face flanges and secured to said face flanges of said respective separate fasteners, and defining interconnecting flexible portions connecting the fasteners together to form a strip, said breakable means being flexible between adjacent said Tee-nut fasteners whereby said strip may be rolled up into a roll.

In a preferred embodiment of the present invention a continuous length of a breakable web forms said breakable means.

Preferably the breakable web has a central axis which is offset from said longitudinal axis of said sleeve portions.

In an alternative embodiment of the present invention said breakable means is formed by a pair of continuous spaced apart wires secured to said face flanges on opposite sides of said sleeve portions, said wires being breakable between said fasteners and spaced unequally from said longitudinal sleeve axis.

Preferably the strip of Tee-nut fasteners constructed according to the present invention is rolled on a core.

According to a further aspect of the present invention there is provided a feed apparatus for use with a fastener setting apparatus for feeding a strip of fasteners constructed according to the present invention, to said fastener setting apparatus.

Preferably rotary support means are provided for supporting a rolled strip of said fasteners and means for rotatably mounting said means are provided whereby the same can rotate as the strip is fed to the feed means.

The rotary support means preferably comprises a generally flat planar table, rotatably mounted on bearings for rotation in a generally horizontal plane.

Preferably means for advancing said strip along a feed slide means in timed relation to the operation of said setting apparatus, are provided.

The various features of novelty which charactarize the invention are pointed out with more particularity in the claims annexed to and forming a part of this disclosure. For a better understanding of the present invention, its operating advantages and specific objects attained by its use, the present invention will now be described, by way of example, with reference to the accompanying drawings, in which:-
Figure 1 is a perspective illustration of part of a preferred embodiment of a Tee-nut strip constructed according to the present invention;
Figure 2 is a perspective of a package of a strip of Tee-nuts as per Figure 1, rolled, and packaged, the packaging being partially cut away;
Figure 3 is a top plan view of a strip of fasteners constructed in accordance with the present invention, showing the feed mechanism in phantom;
Figure 4 is a front perspective of a fastener setting apparatus showing a preferred feed apparatus for use with a strip of Tee-nuts according to the invention;
Figure 5 is a lower perspective illustration of the feed apparatus of Figure 4;
Figure 6 is an inverted plan view of the feed mechanism of the feed apparatus of Figure 5 partially cut away;
Figure 7 is a section along the line 7-7 of Figure 6;
Figure 8 is a perspective of the end of the feed apparatus, showing the manner in which nuts are supported and then driven downwardly;
Figure 9 is a schematic perspective illustration of an alternate embodiment of a feed apparatus, in a first position;
Figure 10 is a perspective illustration of the apparatus of Figure 9, shown rotated into another position, and
Figure 11 illustrates an alternate form of strip and junction means constructed according to the present invention.

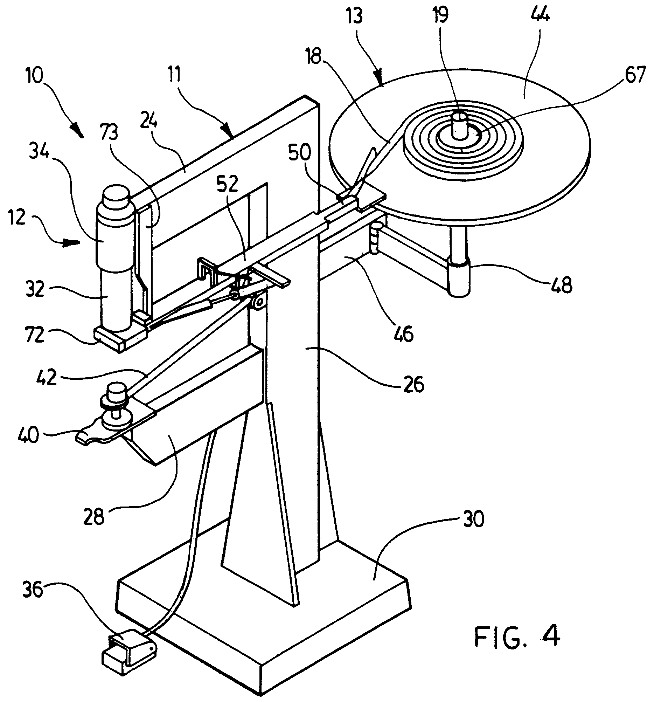

Referring first of all to Figure 4 of the accompanying drawings, one form of Tee-nut setting apparatus is indicated by the general reference arrow 10. It will be seen to comprise a support assembly 11, and a driving assembly 12. The feed assembly according to the invention is shown as 13. All three of the assemblies in this case are supported together on a common stand 26,30.

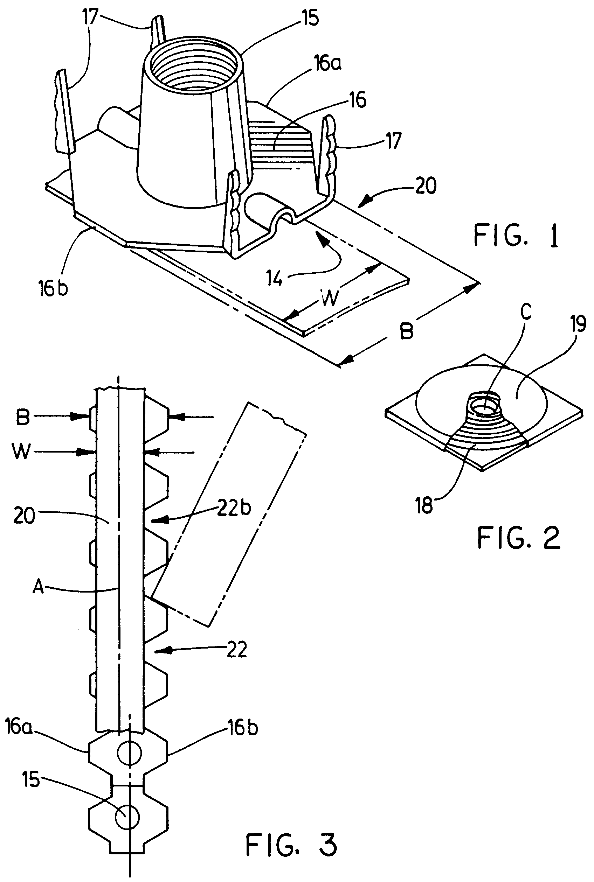

Before describing the apparatus of Figure 4 in detail, we would explain that the Tee-nut setting apparatus is used for setting threaded fasteners known as Tee-nuts, in a wooden workpiece such as a portion of an article of furniture. Such Tee-nuts may be used, for example, with many items of furniture and other products. Tee-nuts are illustrated in Figure 1 and identified generally by reference numeral 14. Each Tee-nut comprises a threaded collar or sleeve 15, and a generally octagonal angular integral face flange 16 having side-portions portions 16a-16b, and spikes or prongs 17 at each end adapted to be driven into the workpiece around the sleeve. The wooden workpiece (not shown) will already be pre-drilled, at the locations where the Tee-nuts are to be set, by a suitable drill apparatus, usually located elsewhere in the plant, and requiring no description.

As will be described below, in accordance with the invention the Tee-nuts 14 are associated together in the form of a continuous strip 18 by strip forming means, in a manner to be described below and are then associated together in a relatively large roll indicated generally as 19, formed around a core C as shown generally in Figure 2.

Referring to Figure 3, the Tee-nuts in a preferred embodiment are joined together into a strip 18, by means generally referred to as a junction. In this case the junction is a continuous strip of adhesive tape 20. The sleeve 15 of each Tee-nut has a central longitudinal axis, the central longitudinal axes lying in a first plane which is transverse to the plane of the face flange 16 and the tape 20. As shown in Figure 3, tape 20 has a width dimension W equal to about one half the breadth dimension B of each Tee-nut 14. The tape 20 defines a central axis A which is offset from the central axis of the sleeve 15 of each Tee-nut 14 by a distance of about 1/2W. The strip 20 is bonded principally to face flanges 16a, and only marginally to face flanges 16B.

In strip 18 the face flanges 16B of adjacent Tee-nuts 14 define an angular recess 22 (Fig. 3)for reasons to be described below.

The setting apparatus for the purposes of this description has a support assembly indicated generally as 11 which comprises a generally rectangular C-shaped frame (Fig. 4), comprising an upper horizontal portion 24, a rear vertical column portion 26, and a lower horizontal portion 28. The vertical column portion 26 is secured by any suitable means on a base 30.

Secured at the forward free end of the upper horizontal portion 24 is a downwardly extending driving assembly indicated generally as 12. It will be seen to comprise a shaft 32, having at its lower free end a hammer head. Shaft 32 is secured to a piston (not shown), located in power cylinder 34.

Typically, cylinder 34 will be a pneumatic cylinder, operated by air pressure supplied by suitable hoses.

Air pressure is controlled by means of a suitable control valve (not shown), in turn, controlled, for example, by a foot pedal 36.

The operation of the piston in the cylinder 34 will cause the shaft 32 to drive downwardly, and to return upwardly.

In order to support a workpiece (not shown) the lower frame portion 28 is provided with a support plate 40, registering beneath the shaft 32. A safety arm 42 is also swingably mounted to the vertical column 26, and until it is displaced upwardly, by insertion of the workpiece, the power cylinder cannot be operated, thereby to provide a measure of safety in the operation of the apparatus.

### The Feed Assembly

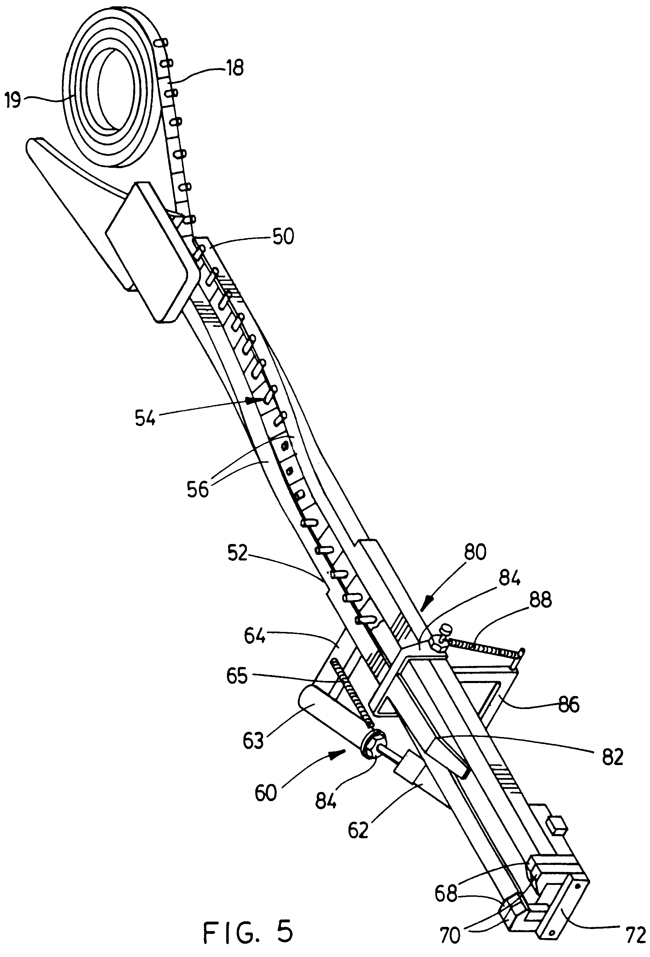

The feed assembly 13 (Figs 4 and 5) according to the invention is provided for feeding Tee-nuts to the driving assembly. The feed assembly in this embodiment comprises a generally horizontal disk-like feed table 44, rotatably mounted on a generally vertical shaft (not shown) which is, in turn, supported, in suitable bearings (not shown), on the cantilever arms 46-48. Arm 46, is in turn, secured in this embodiment to vertical portion 26, so that the table 44 is supported for rotation in a horizontal plane to one side of the register assembly 11 and driving assembly 12.

Alternatively table 44 could of course be separate from the fastener setting apparatus and supported independently, in any suitable manner.

A guide 50 connects between the surface of feed table 44, and a location beneath the cylinder 34, registering with shaft 32. The guide 50 is secured to the vertical column 26, but is not secured to the table 44, so that the table 44 is free to rotate, while the guide 50 remains stationary.

A roll 19 of Tee-nuts 14 is shown in Fig.4 located on the table 44, and the outer free end of the strip 18 is shown extending through the guide 50. The guide 50 is arranged in the form of a support channel which is oriented and adapted to support the Tee-nuts "on edge" in the manner in which the strip 18 will unravel from the roll 19. This ensures the smooth, regular, unwinding or unravelling of the strip from the roll during operation.

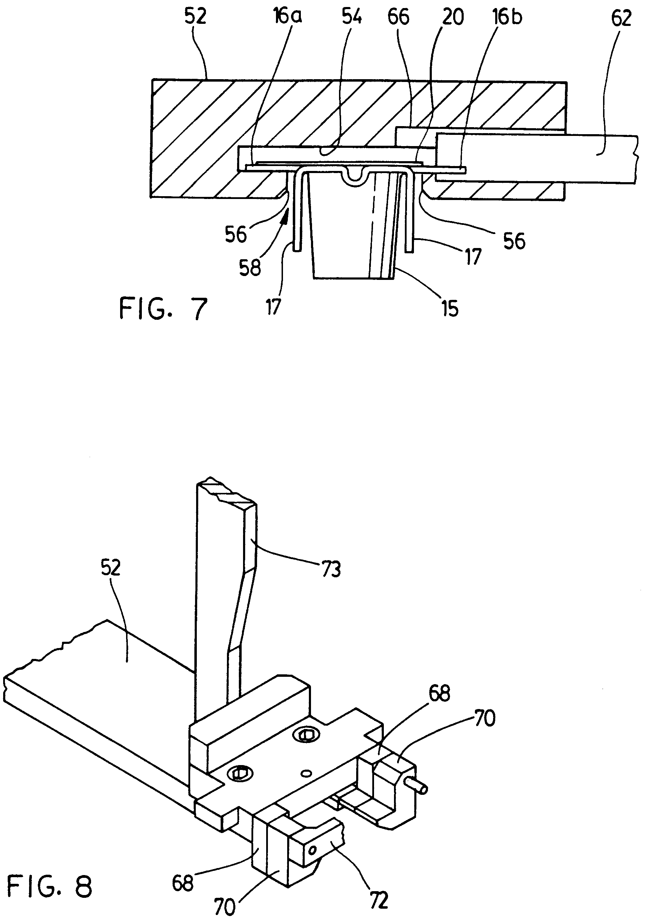

Guide 50 is designed so that along its length it twists through ninety degrees (Fig.5) and becomes feed slide 52. The guide 50 and feed slide 52 are formed integrally as a continuous channel or alternatively guide 50 and slide 52 can be formed separately with a small space between them if desired. The guide 50 and slide 52 define a channel 54 of a predetermined width, having shoulders 56-56, enclosing a portion of the channel and defining an open narrow slot 58 (Fig.7) having a width less than said predetermined width of said channel.

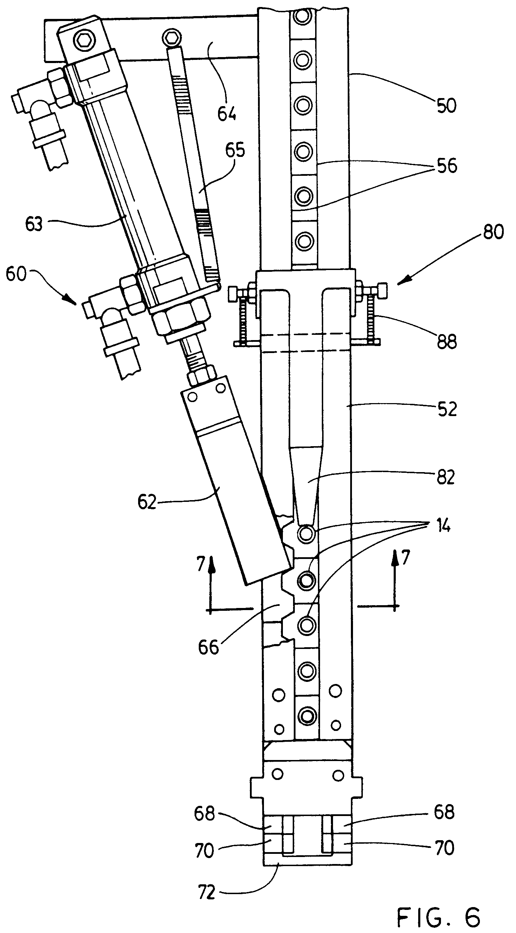

In operation a strip 18 of fasteners 14, comprising a plurality of individual fasteners 14-14 secured to junction means (see Figure 3), is fed from roll 19 on the table 44 into the guide 50 and then along the feed slide 52. A feed mechanism is indicated generally as 60 (Fig.5). The feed mechanism 60 has a feed finger 62 operated by a power-operated swingable cylinder 63 mounted on arm 64, the cylinder 63 being angled to the slide 52 and thus strip 18, biassed by a spring 65 so as to engage the strip 18, and being operable to feed the strip 18 along the slide 52 (Figure 6). Alternatively the cylinder 63 can be replaced by any other suitable power operated means.

Finger 62 slides in a recess 66 (Figs. 6 and 7), located in one side of slide 52, for reasons described below.

It will be noted from Figure 4 that the roll 19 of fasteners is positioned on the table 44, with the fasteners on an edge. A central boss 67 locates the roll 19 centrally on the table. In this way, the strip of fasteners can be freely unwound from the roll 19. However, as the leading end portion of the strip 18 passes through guide 50 and along feed slide 52, it twists through approximately 90 degrees, so that when the strip of fasteners is in the slide 52, the fasteners are lying with their threaded sleeve portion 15 extending perpendicular through the slot 58 (Fig.7).

At the point where the end of the slide 52 registers with the shaft 32, the slide is provided with four swingable L-shaped support claws 68-70, and an end stop 72 - see Fig.8. The claws 68,70 and the end stop 72 are bolted to the free end of the slide 52, with the claws registering with the edges of the shoulders 56. In this way, the endmost Tee-nut in the strip may be slid out of the slide 52 itself, and will then be supported solely on the four claws 68,70.

The claws 68,70 are arranged so they may swing away just as the shaft 32 is moved axially by operation of the cylinder 34, thereby freeing the endmost fastener so that it may be driven downwardly into a workpiece. Springs (not shown) engage the claws 68,70 to urge them back into their vertical positions as shown, the movement of the claws being shown only in phantom.

Preferably, the cylinder 63 of the feed mechanism is operated in timed relation to the operation of the cylinder 34. Such timed operation may be achieved by a separate valve and control (not shown), so that the air exhausted from cylinder 34 after completion of its setting stroke, is then supplied to the cylinder 63 to provide a feed stroke. In this way, the feed mechanism will operate alternately with the setting mechanism, and provide a timed sequencing of movement of the strip 18 along the guide 50 and slide 51.

An escapement mechanism 80 (Figs. 5 and 6) is provided to prevent reverse movement of the strip 18 in slide 52. This escapement mechanism 80 comprises a stop arm 82, swingably mounted on flanges 84 to the sides of the slide 52. A bridge frame 86 is secured to the opposite side of slide 52 and springs 88 connect from frame 86 to flanges 84 so as to bias arm 82 upwardly. Arm 82 can be deflected downwardly as each Tee-nut 14 is fed incrementally along slide 51.

In operation, an operator sets the roll 19 of fasteners on table 44. He threads the free end of the strip 18 into guide 50 and along slide 52 and past feed mechanism 60 and arm 82 until the end of the strip registers with claws 68-70.

The operator then places a workpiece on support 40, thereby displacing arm 42, and then presses pedal 36, operating cylinder 34. Shaft 32 then drives downwardly and engages the end-most Tee-nut 14 in strip 18 and drives it down into the workpiece. The cylinder 34 then returns upwardly. The feed cylinder 63 then operates and finger 62 is extended into its recess 66. Finger 62 which is angled to the strip 18, then engages an angular surface of flange 16b of a Tee-nut 14 and pushes the strip along the slide 52. The construction of the strip 18, with the web 20 offset to one side is of importance to this operation as the finger 62 can enter into the angular recess 22 between two Tee-nuts to a greater depth, on the side of the flanges 16b and thus ensures a positive engagement of each Tee-nut. Further, the finger 62 is thicker than the face flanges 16b. By providing the diagonal recess 66 for finger 62, the underside of finger 62 is below the plane of flange 16b. This also ensures positive engagement of each Tee-nut.

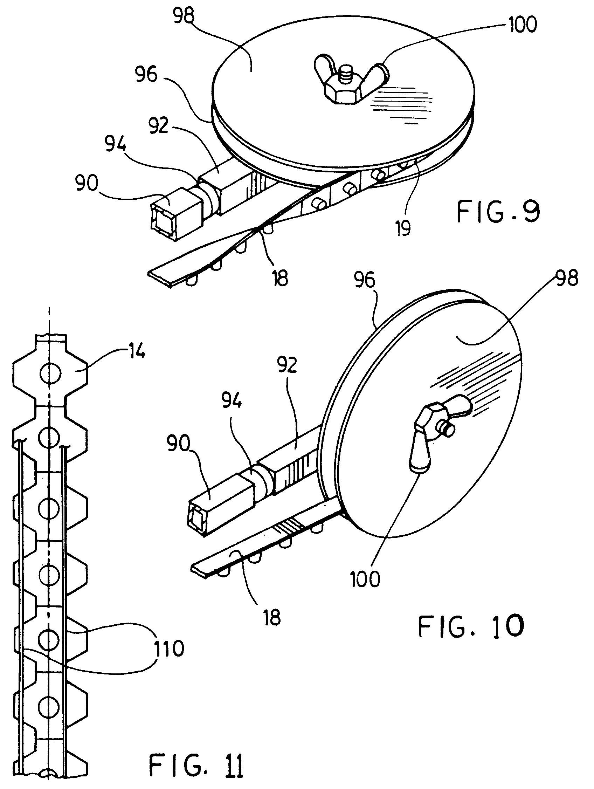

An alternate feed table arrangement is shown in Figures 9 and 10. In this case a support arm 90 is connected to a rotatable arm 92, by a coupling 94. A table 96 is rotatably secured to arm 92 and, in use, a releasable clamping plate 98 is secured, for example by nut 100 over a roll 19 of Tee-nuts placed on table 96. Table 96 and plate 98 are then swung into a vertical plane (Fig.10). Thus the strip 18 can then feed directly into feed slide 52, without going through a ninety degree twist.

An alternate form of strip and junction is shown in Fig.11. It comprises Tee-nut fasteners 14, joined by wires 119-110. The wires define a central axis therebetween, which is offset from the central axis of the Tee-nuts for reasons described above. The wires are flexible, and breakable, between the Tee-nuts.

The foregoing is a description of a preferred embodiment of the invention which is given here by way of example only. The invention is not to be taken as limited to any of the specific features as described, but comprehends all such variations thereof as come within the scope of the appended claims.

## Claims

1. A plurality of individual Tee-nut fasteners (14), wherein said fasteners (14) have sleeve portions (15) adapted to be embedded in a workpiece, and face flanges (16) adapted to lie on the surface of a workpiece, said sleeve portions (15) each having a central longitudinal axis and said longitudinal axes lying in a first plane, said face flanges (16) lying in a further plane which is transverse to said first plane, the plurality of said fasteners (14) all being separate and spaced from one another, characterized by a length of continuous flexible breakable means (20,110) overlying said face flanges (16) and secured to said face flanges (16) of said respective separate fasteners (14), and defining interconnecting flexible portions connecting the fasteners (14) together to form a strip (18), said breakable means (20,110) being flexible between adjacent said Tee-nut fasteners (14) whereby said strip (18) may be rolled up into a roll (19).

2. A plurality of individual Tee-nut fasteners as claimed in claim 1 wherein a continuous length of a breakable web (20) is separately attached to individual said fasteners (14).

3. A plurality of individual Tee-nut fasteners as claimed in claim 1 or claim 2, wherein an elongate breakable web (20) forms said breakable means, the web having a central longitudinal axis (A), which is offset from said first plane.

4. A plurality of individual Tee-nut fasteners as claimed in claim 1, wherein said breakable means comprises a pair of continuous spaced apart wires (110) secured to said face flanges on opposite side regions of said sleeve portions, said wires being breakable between said fasteners and being spaced unequally from said first plane.

5. A plurality of individual Tee-nut fasteners as claimed in any one of claims 1 to 4, including a core (C) with said strip (18) of fasteners rolled o said core, with said sleeve portions (15) oriented radially relative to said core (C).

6. A feed apparatus (13) for use with a fastener setting apparatus (11), (12) for feeding a strip (18) of Tee-nut fasteners (14) as claimed in any one of claims 1 to 5, wherein said feed apparatus is characterized by rotary support means (44,96) for supporting a rolled strip (19) of said fasteners, said rotary support means defining a predetermined plane on which said face flanges (16) lie on edge with first plane defined by said sleeve portions (15) extending parallel to said support means (44,96), and feed means (50,52) for transmitting said strip (18) from said support means (44,96) to said setting apparatus, and means (46,48) for rotatably mounting said support means (44,96) whereby said support means (44,96) can rotate as said strip (18) is fed to said fastener setting apparatus.

7. Apparatus as claimed in claim 6, wherein a generally flat planar table (44), mounted on bearing means for rotation in a generally horizontal plane, forms said support means.

8. Apparatus as claimed in claim 6 or claim 7 wherein means (60) are provided for advancing said strip (18) along said feed means (50,52) in timed relation to the operation of said setting apparatus (12).

9. Apparatus as claimed in claim 6 wherein said rotary support means (96) is swingable between horizontal and vertical orientations.

## Patentansprüche

1. Mehrzahl von individuellen T-Mutter-Befestigungsmitteln (14), bei der die genannten Befestigungsmittel (14) Hülsenabschnitte (15), die in ein Werkstück eingebettet werden, und Stirnflansche (16) aufweisen, die auf der Oberfläche eines Werkstückes liegen, wobei jeder der Hülsenabschnitte (15) eine mittlere Längsachse hat und die genannten Längsachsen in einer ersten Ebene liegen, wobei die genannten Stirnflansche (16) in einer weiteren Ebene liegen, die quer zu der genannten ersten Ebene verläuft, wobei alle Befestigungsmittel (14) der genannten Mehrzahl voneinander getrennt und beabstandet sind, gekennzeichnet durch eine Länge eines kontinuierlichen flexiblen berstbaren Mittels (20, 110), das über den genannten Stirnflanschen (16) liegt und an den genannten Stirnflanschen (16) der genannten jeweiligen separaten Befestigungsmittel (14) befestigt ist und verbindende flexible Abschnitte bildet, die die Befestigungsmittel (14) zur Bildung eines Bandes (18) miteinander verbinden, wobei die genannten berstbaren Mittel (20, 110) zwischen benachbarten der genannten T-Mutter-Befestigungsmittel (14) flexibel sind, so daß das genannte Band (18) zu einer Rolle (19) zusammengerollt werden kann.

2. Mehrzahl von individuellen T-Mutter-Befestigungsmitteln nach Anspruch 1, bei der eine kontinuierliche Länge eines berstbaren Stegs (20) separat an individuellen der genannten Befestigungsmittel (14) befestigt ist.

3. Mehrzahl von individuellen T-Mutter-Befestigungsmitteln nach Anspruch 1 oder Anspruch 2, bei der ein länglicher berstbarer Steg (20) das genannte berstbare Mittel bildet, wobei der Steg eine mittlere Längsachse (A) hat, die von der genannten ersten Ebene versetzt ist.

4. Mehrzahl von individuellen T-Mutter-Befestigungsmitteln nach Anspruch 1, bei der das genannte berstbare Mittel ein Paar kontinuierlicher, voneinander beabstandeter Drähte (110) umfaßt, die in gegenüberliegenden Seitenregionen der genannten Hülsenabschnitte an den genannten Stirnflanschen befestigt sind, wobei die genannten Drähte zwischen den genannten Befestigungsmitteln berstbar und ungleichmäßig von der genannten ersten Ebene beabstandet sind.

5. Mehrzahl von individuellen T-Mutter-Befestigungsmitteln nach einem der Ansprüche 1 bis 4, beinhaltend einen Kern (C) mit dem genannten Band (18) von Befestigungsmitteln, die auf den genannten Kern gerollt sind, wobei die genannten Hülsenabschnitte (15) radial relativ zu dem genannten Kern (C) ausgerichtet sind.

6. Speisevorrichtung (13) für die Verwendung mit einer Vorrichtung (11), (12) zum Anbringen von Befestigungselementen zur Speisung eines Bandes (18) von T-Mutter-Befestigungsmitteln (14) nach einem der Ansprüche 1 bis 5, wobei die genannte Speisevorrichtung gekennzeichnet ist durch ein Rotationsabstützungsmittel (44, 96) zum Abstützen eines gerollten Bandes (19) der genannten Befestigungsmittel, wobei das Rotationsabstützungsmittel eine vorbestimmte Ebene definiert, auf der die genannten Stirnflansche (16) hochkant liegen, wobei die erste Ebene durch die genannten Hülsenabschnitte (15) definiert wird, die parallel zu dem genannten Unterstützungsmittel (44, 96) verlaufen, und ein Speisungsmittel (50, 52) zum Transportieren des genannten Bandes (18) von dem genannten Anstützungsmittel (44, 96) zu der genannten Anbringungsvorrichtung, sowie ein Mittel (46, 48) zum drehbaren Montieren des genannten Abstützungsmittels (44, 96), so daß das genannte Abstützungsmittel (44, 96) rotieren kann, während das genannte Band (18) zu der genannten Vorrichtung zum Anbringen von Befestigungselementen gespeist wird.

7. Vorrichtung nach Anspruch 6, bei der ein allgemein flacher, ebener Tisch (44), der auf einem Lager zur Rotation in einer allgemein horizontalen Ebene montiert ist, das genannte Abstützungsmittel bildet.

8. Vorrichtung nach Anspruch 6 oder Anspruch 7, bei der Mittel (60) vorgesehen sind, um das genannte Band (18) über das genannte Speisungsmittel (50, 52) in zeitlich gesteuerter Beziehung zum Betrieb der genannten Anbringungsvorrichtung (12) vorzuschieben.

9. Vorrichtung nach Anspruch 6, bei der das genannte Rotationsabstützungsmittel (96) zwischen einer horizontalen und einer vertikalen Ausrichtung schwenkbar ist.

## Revendications

1. Pluralité d'éléments de fixation d'écrous en forme de té individuels (14), dans laquelle lesdits éléments de fixation (14) ont des parties de manchon (15) adaptées pour être encastrées dans une pièce, et des bords de face (16) adaptés pour reposer sur la surface d'une pièce, lesdites parties de manchon (15) ayant chacune un axe longitudinal central et lesdits axes longitudinaux reposant dans un premier plan, lesdits bords de face (16) reposant dans un autre plan qui est transversal audit premier plan, la pluralité desdits éléments de fixation (14) étant tous séparés et espacés les uns des autres, caractérisée par une longueur de moyen continu souple cassable (20,110) recouvrant lesdits bords de face (16) et fixée auxdits bords de face (16) desdits éléments de fixation séparés respectifs (14) et définissant des parties souples d'interconnexion connectant les éléments de fixation (14) ensemble pour former une bande (18), ledit moyen cassable (20,110) étant souple entre lesdits éléments de fixation d'écrous en forme de té (14) adjacents de manière à ce que ladite bande (18) puisse être enroulée en rouleau (19).

2. Pluralité d'éléments de fixation d'écrous en forme de té individuels telle que revendiquée à la revendication 1, dans laquelle une longueur continue d'une toile cassable (20) est fixée séparément auxdits éléments de fixation individuels (14).

3. Pluralité d'éléments de fixation d'écrous en forme de té individuels telle que revendiquée à la revendication 1 ou la revendication 2, dans laquelle une toile cassable allongée (20) forme ledit moyen cassable, la toile ayant un axe longitudinal central (A), lequel est décalé dudit premier plan.

4. Pluralité d'éléments de fixation d'écrous en forme de té individuels telle que revendiquée à la revendication 1, dans laquelle ledit moyen cassable comprend une paire de fils métalliques continus espacés (110) fixés auxdits bords de face en des points latéraux opposés desdites parties de manchon, lesdits fils métalliques étant cassables entre lesdits éléments de fixation et inégalement espacés par rapport audit premier plan.

5. Pluralité d'éléments de fixation d'écrous en forme de té individuels telle que revendiquée dans l'une quelconque des revendications 1 à 4, comportant un noyau (C) lorsque ladite bande (18) d'éléments de fixation est enroulée sur ledit noyau, lesdites parties de manchon (15) étant orientées radialement par rapport audit noyau (C).

6. Dispositif d'alimentation (13) destiné à être utilisé avec un dispositif de pose d'éléments de fixation (11), (12) pour alimenter une bande (18) d'éléments de fixation d'écrous en forme de té (14) telle que revendiquée dans l'une quelconque des revendications 1 à 5, dans lequel ledit dispositif d'alimentation est caractérisé par un moyen de support rotatif (44,96) pour supporter une bande enroulée (19) desdits éléments de fixation, ledit moyen de support rotatif définissant un plan prédéterminé sur lequel lesdits bords de face (16) reposent sur le bord, le premier plan défini par lesdites parties de manchon (15) s'étendant parallèlement audit moyen de support (44,96), et des moyens d'alimentation (50,52) pour transmettre ladite bande (18) depuis ledit moyen de support (44,96) audit dispositif de pose, et un moyen (46,48) pour monter de manière rotative ledit moyen de support (44,96) de telle sorte que ledit moyen de support (44,96) puisse tourner quand ladite bande (18) est alimentée dans ledit dispositif de pose des éléments de fixation.

7. Dispositif tel que revendiqué à la revendication 6, dans lequel une table plane généralement plate (44), montée sur des moyens porteurs pour tourner dans un plan généralement horizontal, forme ledit moyen de support.

8. Dispositif tel que revendiqué à la revendication 6 ou la revendication 7, dans lequel des moyens (60) sont fournis pour avancer ladite bande (18) le long desdits moyens d'alimentation (50,52) en relation synchrone avec le fonctionnement dudit dispositif de pose (12).

9. Dispositif tel que revendiqué à la revendication 6, dans lequel ledit moyen de support rotatif (96) peut basculer entre les orientations horizontale et verticale.
